# EUROPÄISCHE PATENTSCHRIFT

(11) **EP 2 030 001 B1**
(45) Veröffentlichungstag und Bekanntmachung des Hinweises auf die Patenterteilung: **09.08.2017**
(21) Anmeldenummer: 07725776.4
(22) Anmeldetag: 01.06.2007
(51) Int. Cl.: G01N 21/64, G06K 9/00, G06T 7/00, G06T 7/90

(54) **VERFAHREN ZUR OPTIMIERUNG DER AUTOMATISCHEN FLUORESZENZMUSTERERKENNUNG IN DER IMMUNDIAGNOSTIK**
METHOD FOR OPTIMIZING AUTOMATIC FLUORESCENCE PATTERN RECOGNITION IN IMMUNODIAGNOSTICS
PROCEDE D'OPTIMISATION DE LA DETECTION AUTOMATIQUE DE MODELE DE FLUORESCENCE EN IMMUNODIAGNOSTIC

(30) Priorität: 09.06.2006 DE 102006027516
(43) Veröffentlichungstag der Anmeldung: 04.03.2009
(60) Teilanmeldung: 17001124.1
(73) Patentinhaber: Euroimmun Medizinische Labordiagnostika AG, 23560 Lübeck (DE)
(72) Erfinder: STÖCKER, Winfried, 23627 Gross Grönau (DE); FAUER, Hendrik, 23617 Stockelsdorf (DE); KRAUSE, Christopher, 21514 Büchen (DE); BARTH, Erhardt, 23626 Ratekau/Ovendorf (DE); MARTINETZ, Thomas, 23564 Lübeck (DE)
(86) Internationale Anmeldenummer: PCT/EP2007/004897
(87) Internationale Veröffentlichungsnummer: WO 2007/140952

(56) Entgegenhaltungen:
- DE-A1- 19 801 400
- US-A1- 2002 186 875
- ONUL A ET AL: "Application of Immunohistocehmical Staining to Detect Antigen Destruction as a Measure of Tissue Damage", JOURNAL OF HISTOCHEMISTRY & CYTOCHEMISTRY, vol. 60, no. 9, 1 September 2012 (2012-09-01), pages 683-693,

## Beschreibung

Die Erfindung betrifft ein Verfahren gemäß Oberbegriff des Patentanspruchs 1. Es dient zur Optimierung der Sicherheit und Genauigkeit bei der computergestützten automatischen Interpretation von Fluoreszenzmustern in der Immundiagnostik.

Beim indirekten Immunfluoreszenztest (IIFT) erfolgt die Ergebnisauswertung im Allgemeinen visuell pro Feld durch Beurteilung des Fluoreszenzmusters bzw. des Bildes unter dem Mikroskop. Alternativ oder unterstützend können automatisierte Verfahren zur Musterklassifikation herangezogen werden.

In der medizinischen Immundiagnostik ist der Nachweis von Antikörpern im Serum eines Patienten ein Hinweis auf ein bestimmtes Krankheitsbild. Dabei dienen Zellen und Gewebeschnitte als Antigen-Substrate. Das Probenmaterial (z.B. mit wässriger Kalisalzlösung verdünntes Serum) des Patienten wird zur Untersuchung mit diesen Antigen-Substraten inkubiert. Die nachzuweisenden Antikörper, falls im Serum vorhanden, binden sich an die Festphasen-gebundenen Antigene. Gebundene Antikörper werden durch einen Fluoreszenzfarbstoff im Mikroskop sichtbar gemacht. Dabei werden abhängig vom jeweiligen Antikörper charakteristische Muster sichtbar.

Häufig werden Antinukleäre Antikörper (ANA) auf humanen Epitelzellen (HEP), Primatenleber und anderen Geweben zum Beispiel bei Patienten mit verschiedenen Rheumaerkrankungen untersucht. Es lassen sich auf diese Weise 50 verschiedene Zellkernantikörper identifizieren. Zum Beispiel Antikörper gegen nDNS (Lupus Erythematodes), SLE, gegen Zentromere (Formen der progressiven Systemsklerose) und gegen Nuclear Dots (Leberzirrhose). Darüber hinaus kann auch das Zytoplasma fluoreszieren, wenn beispielsweise Antikörper gegen Mitochondrien (Diagnose: Primär biliäre Zirrhose - PBC) vorliegen.

Genauso ist es möglich, dass Bakterien oder virusinfizierte Zellen als Substrat eingesetzt und auf diesem Wege die entsprechenden Infektionskrankheiten diagnostiziert werden. Die Diagnostik mit infizierten Zellen oder Viren stellt eine sehr valide Diagnostik dar.

Die Immunfluoreszenztechnik hat viele Vorteile. So werden viele Parameter untersucht und mit einem Substrat werden oftmals viele verschiedene Antikörper identifiziert. Die Antigene liegen unmittelbar vor, während sie bei biochemischen Methoden erst isoliert und gebunden werden müssen. Aus diesem Grund sind die Antigene in bestmöglicher nativer Form vorhanden und die Antikörperdiagnostik mit der Immunfluoreszenztechnik ist in vielen Fällen diagnostisch besonders kompetent. Auf Grund von Unterschieden in den Fluoreszenzmustern lassen sich auch spezifische und unspezifische Reaktionen besonders gut voneinander unterscheiden. Im Gegensatz dazu zeigen biochemische Verfahren nur an, dass eine Reaktion statt gefunden hat ohne die Möglichkeit deren Relevanz abzuschätzen, da sich dort spezifische von unspezifischen Reaktionen nicht voneinander unterscheiden lassen, was in der Immunfluoreszenz durch einen Blick ins Mikroskop oft auf Anhieb gelingt.

Dennoch wird die Fluoreszenztechnik als Massenmethode nicht überall gerne verwendet. Die Auswertung der Fluoreszenzbilder erfolgt üblicherweise visuell und erfordert sehr gut geschultes Personal, sie ist zeitaufwendig, und eine ihrer wesentlichen Schwächen liegt in der Subjektivität der Beurteilung. Auf Grund dieser Nachteile wird seit längerem an einer Automatisierung der Mustererkennung gearbeitet, um diesen Prozess rationeller, objektiver und sicherer zu gestalten.

Die automatische computergestützte Auswertung der Fluoreszenzbilder erfolgt in mehreren Schritten. Im Allgemeinen handelt es sich hierbei um Bildaufnahme, Bildverarbeitung, Merkmalsextraktion und Klassifikation. Die Klassifikation der Fluoreszenzbilder erfolgt durch die Zuordnung definierter Bildmerkmale zu Klassenmerkmalen von Fluoreszenzmustern. Die öfters vorkommende Anwesenheit mehrerer Antikörper in der zu untersuchenden Patientenprobe führt zu einer großen Vielfalt möglicher Mischmuster. In der Klassifikation sollen jedoch die Grundmuster aus denen sich die Mischformen zusammensetzen, erkannt werden, um alle erkennbaren Antikörper festzustellen.

Eine allgemein anerkannte automatisierte Analyse der Fluoreszenzbilder, wie sie beispielsweise in Patent DE19801400 beschrieben ist, hat sich derzeit noch nicht durchgesetzt. Dies liegt vor allem daran, dass es die durch die statistischen Kennwerte Sensitivität, Spezifität, Relevanz, Segreganz, Korrektklassifikationsrate und Falschklassifikationsrate charakterisierte Güte der automatischen Klassifikation noch nicht zulässt, eine medizinische Diagnose überwiegend auf die automatische Auswertung zu stützen. Die Schwächen der bestehenden automatischen Verfahren liegen in zwei Sachverhalten begründet:
1. Zum einen beruht die Klassifikation der Fluoreszenzmuster auf einer vorangegangenen Merkmalsextraktion ohne die Anwendung eines von der Fluoreszenz unabhängigen permanent wirksamen Verfahrens zur Identifikation relevanter Strukturen im Fluoreszenzbild.
2. Zum anderen wird die Auswertung der extrahierten Bildmerkmale in der Form eines hierarchischen Entscheidungsbaumes durchgeführt. Dabei ist der Weg zum Endergebnis an jeder Verzweigung von der dort getroffenen Einzelentscheidung abhängig. Wenn eine dieser Einzelentscheidungen falsch getroffen wird, führt dies zu einem in der Regel falschen Endergebnis.

Die US2002/0186875 beschreibt ein Verfahren zur pathologischen Untersuchung von Gewebeproben unter Verwendung von fluoreszenzfähigen Farbstoffen. Die erfindungsgemäßen Schritte c) bis f) oder der Nachweis von Antikörpern sind nicht vorgesehen.

Aufgabe der Erfindung ist es, die automatische Klassifikation von Fluoreszenzmustern im Hinblick auf deren statistisch relevante Kennwerte wie Sensitivität, Spezifität, Relevanz, Segreganz, Korrektklassifikationsrate und Falschklassifikationsrate zu verbessern.

Zur **Lösung** dieser Aufgabe dient das Verfahren der eingangs genannten Art, das außerdem die kennzeichnenden Merkmale des Patentanspruchs 1 aufweist.

Dadurch wird erreicht, dass die relevanten Strukturen für die Untersuchung der durch spezifische Farbstoffe, wie z.B. Fluorescein, erzeugten Fluoreszenzmuster, auf den Bildern zuverlässig lokalisiert und in Einzelbilder extrahiert werden können, und dass die Ergebnisse durch einzelne Fehlinterpretationen nicht verfälscht werden können.

Dabei wird die computergestützte, automatische Klassifikation von Fluoreszenzmustern bezüglich der Anzahl unterscheidbarer Muster und bezüglich der Güte der Mustererkennung optimiert. Statistisch relevante Kennwerte für die Güte in diesem Zusammenhang sind Sensitivität, Spezifität, Relevanz, Segreganz, Korrektklassifikationsrate und Falschklassifikationsrate.

Die Anzahl unterscheidbarer Muster und die die Güte kennzeichnenden statistischen Kennwerte können verbessert werden durch
1. die Markierung relevanter Strukturen mit Hilfe zusätzlicher Farbstoffe, um diese unabhängig von der Ausprägung des Fluoreszenzmusters mit gleich bleibend guter Zuverlässigkeit identifizieren zu können,
2. die Ausdehnung des Verfahrens der Auswertung der durch den spezifischen Markerfarbstoff Fluorescein verursachten Fluoreszenzmuster auf eine Vielzahl relevanter Strukturen auf verschiedenen Gewebeschnitten, infizierten Zellen, nicht infizierten Zellen und Ausstrichen von Bakterien, Pilzen oder Parasiten mit anschließender automatischer Validierung der zu jeder Struktur ermittelten Einzelklassifikationsergebnisse gegen eine, valide Ergebniskombinationen enthaltende, Ergebnismatrix.

Vor der Bildaufnahme mit einer Kamera werden zusätzlich oder gemeinsam mit dem Fluoreszenzfarbstoff ein oder mehrere weitere Indikatorfarbstoffe für die Lokalisation relevanter Strukturen inkubiert, wobei Propidiumiodid als ein Indikatorfarbstoff verwendet Wird.

Diese Indikatorfarbstoffe können auf Gewebeschnitten, infizierten Zellen, nicht infizierten Zellen und Ausstrichen von Bakterien, Pilzen oder Parasiten zur Unterstützung einer automatischen Bildauswertung eingesetzt werden.

Es wurde zwar schon vorgeschlagen mit Doppelfluoreszenztechniken zu arbeiten, indem man beispielsweise die Inselzellen der Bauchspeicheldrüse (Pankreasinseln) mit Rhodamingekoppelten Antikörpern markiert, um sie unter Grünanregung und Rotauswertung zu lokalisieren. In einem zweiten Schritt würde dann der Filter gewechselt und unter Blauanregung und Grünauswertung das Fluoreszenzbild des spezifischen Patientenantikörpers analysiert. Bei diesem beschriebenen Verfahren der Doppelfluoreszenz wird jedoch mit hohem Aufwand (Farbstoffgekoppelte Antikörper gegen die zu untersuchenden Antigene sind notwendig) genau die diagnostische Zielstruktur angefärbt, was für die automatisierte Bildauswertung zu aufwendig ist, die Verwendung zwei verschiedener Filtersysteme nacheinander erfordert und zu einer Verfälschung des Endergebnisses führen kann, da zur Lokalisierung der Pankreasinsel das gleiche biochemische Prinzip verwendet wird wie bei der spezifischen Reaktion: Der für deren Lokalisierungsreaktion verwendete Antikörper konkurriert mit dem Antikörper der zu untersuchenden Probe und reduziert dadurch das spezifische Signal.

Für die automatisierte Bildauswertung wird ein Farbstoff eingesetzt, der unabhängig von der Art der diagnostischen Fragestellung bestimmte relevante Strukturen auf Gewebeschnitten, infizierten Zellen, nicht infizierten Zellen und Ausstrichen von Bakterien, Pilzen oder Parasiten anfärbt. (Bei Virus- oder Bakterienlokalisationen werden ggf. Antikörper gegen Determinanten verwendet, die diagnostisch nicht relevant sind, z.B. p41 der Borrelien.) Dabei muss die Verteilung der Indikatorfarbstoffe und der spezifischen Fluoreszenzfarbstoffe nicht übereinstimmen, aber sie kann es.

Bei der Identifikation relevanter Strukturen mit Hilfe von Indikatorfarbstoffen wird die Eigenschaft bestimmter Farbstoffe wie zum Beispiel Propidiumjodid ausgenutzt, sich besonders stark oder ausschließlich an bestimmte Moleküle wie zum Beispiel Nucleinsäuren zu binden. Durch Propidiumjodid werden die Zellkerne, die Nucleoli und die Chromosomenregion von Zellen im Mitosestadium deutlich sichtbar markiert.

Die eingesetzten Indikatorfarbstoffe müssen auf dem Fluoreszenzbild in eigenen Farbkanälen sichtbar sein. Falls nicht anders möglich, können auch mehrere Bilder unter Verwendung verschiedener Filtersysteme aufgenommen und gemeinsam weiter verarbeitet werden. Je nach Wahl des Indikatorfarbstoffes kann dieser in den Farbkanal des Fluoreszenzfarbstoffes hineinwirken und muss anteilig aus diesem herausgerechnet werden. Dies geschieht unter Verwendung fester Algorithmen oder unter Verwendung von Kalibrationsbildern. Für die Erzeugung von Kalibrationsbildern wird nur der Indikatorfarbstoff ohne Fluoreszenzfarbstoff auf einem Objektträger inkubiert. Die Stärke der Färbung im Farbkanal des nicht vorhandenen Fluoreszenzfarbstoffes ist in Abhängigkeit von der Farbintensität des Indikatorfarbstoffes zu ermitteln und kann in einem Histogramm des aufgenommenen Mikroskopbildes dargestellt werden. Der ermittelte Farbwert im Farbkanal des Fluoreszenzfarbstoffes wird bei den Fluoreszenzmustern entsprechend der zugehörigen Farbintensität des Indikatorfarbstoffes abgezogen.

Der Einsatz von Indikatorfarbstoffen erlaubt die zuverlässige Identifizierung relevanter Gewebe- oder Zellstrukturen unabhängig vom Fluoreszenzmuster. Dadurch können deren spezifische Merkmale im Farbkanal des Fluoreszenzfarbstoffes in jedem Fall sicher extrahiert werden.

Die verschiedenen Zelltypen, Zellzyklusstadien oder Gewebeschnitte reagieren in Abhängigkeit vom Antikörper unterschiedlich. Dabei ist die Gesamtheit der Reaktionen für jedes Fluoreszenzmuster charakteristisch. Beispielsweise ist es für die Unterscheidung zwischen den Fluoreszenzmustern von Antikörpern gegen SSA,B und RNP/SM bei der Diagnostik antinukleärer Antikörper (ANA-Diagnostik) charakteristisch, dass die Leberzellkerne bei RNP/SM etwa gleich hell und bei SSA,B deutlich schwächer oder nicht im Vergleich mit den HEP-Zellen fluoreszieren. So lassen sich Fluoreszenzmuster, die teilweise gleich oder ähnlich aussehen, unter Berücksichtigung von Unterschieden auf anderen Geweben oder Strukturen eindeutig differenzieren.

Um dieses Wissen für die computergestützte Fluoreszenzbildanalyse nutzbar und die Musterklassifikation robust gegen einzelne Fehlzuordnungen zu machen, wird eine Vielzahl verschiedener Strukturen aus Gewebeschnitten, infizierten Zellen, nicht infizierten Zellen und Ausstrichen von Bakterien, Pilzen oder Parasiten, nach dem im Folgenden beschriebenen Verfahren unter Verwendung einer, valide Ergebniskombinationen enthaltenden, Ergebnismatrix untersucht.

Die Fluoreszenzbilder werden in Gruppen von Einzelbildern gleichartiger relevanter Strukturen zerlegt. Diese Gruppen beinhalten beispielsweise nur die Chromosomenregionen von Zellen im Entwicklungsstadium der Mitose (Mitosezellen) oder nur die Nucleoli von Interphasezellen oder nur die Zellkerne von Lebergewebeschnitten etc. Für diese Gruppen von Einzelbildern werden quantifizierbare Bildmerkmale mittels Standardverfahren der Bildverarbeitung wie Granulometrie, Grauwertematrix extrahiert. Mittels Klassifikation gegen die Bildmerkmale von Gruppen entsprechender Strukturen aus bekannten Fluoreszenzmustern entsteht für jede Gruppe relevanter Strukturen ein Gruppenklassifikationsergebnis in Form einer Fluoreszenzmusterzuordnung.

Die einzelnen Gruppenergebnisse werden anschließend auf Basis einer dreidimensionalen Eigenschaftsmatrix gegeneinander validiert. Diese Eigenschaftsmatrix enthält für jede Gruppe (Dimension 1) Zuordnungen ähnlicher Fluoreszenzmuster (Dimension 2) unter Berücksichtigung der Fluoreszenzhelligkeit (Dimension 3). Bei diesen Zuordnungen muss sichergestellt sein, dass immer ein eindeutiges Endresultat gefunden werden kann.

Im ersten Schritt wird die Helligkeitsstufe der Fluoreszenz auf den zu analysierenden Bildern bestimmt. Dies geschieht durch die Bewertung der Helligkeit einer dafür geeigneten Ergebnisgruppe. Mit dem ermittelten Wert der Helligkeitsstufe für diese Ergebnisgruppe erhält man ein eindeutiges Element der Eigenschaftsmatrix als Einstiegs- und Bezugspunkt. Voraussetzung für die Durchführung einer Helligkeitsbewertung sind standardisierte Bedingungen bei der Inkubation und bei der Bildaufnahme. Besonders betrifft dies Inkubationstemperatur und -zeit, sowie die Belichtungszeit, falls der Farbstoff ausbleichen kann.

Im zweiten Schritt werden die anderen Gruppenergebnisse mit den zur ermittelten Helligkeitsstufe in der Eigenschaftsmatrix hinterlegten Ergebnissen verglichen. Dieser Vergleich wird in Bezug auf die Fluoreszenzmusterzuordnung und die Fluoreszenzhelligkeit durchgeführt. Dabei werden zu jedem Gruppenergebnis ähnliche und damit möglicherweise auch richtige Ergebnisse ermittelt.

Im dritten Schritt findet ein Abgleich der gefundenen Ergebnismengen statt, bei dem unpassende Kombinationen aussortiert werden und ein eindeutiges Endergebnis ermittelt wird.

Dieses Verfahren macht das System robust gegenüber Fehlklassifikationen einzelner untersuchter Bildstrukturen.

Zusammenfassend ist zu sagen, dass durch die (fluoreszenzmusterunabhängige) Identifikation relevanter Strukturen mit Hilfe von einfach zu handhabenden Farbstoffen, die Ausdehnung des Verfahrens der Fluoreszenzmusterauswertung auf eine Vielzahl relevanter Strukturen in Gewebeschnitten, infizierten Zellen, nicht infizierten Zellen und Ausstrichen von Bakterien, Pilzen oder Parasiten, sowie die Klassifikation von Gruppen relevanter Strukturen in Form einer Fluoreszenzmusterzuordnung zu jeder Gruppe und die gemeinsame Validierung der Gruppenergebnisse gegen eine dreidimensionale Ergebnismatrix die, durch verschiedene statistische Kennwerte charakterisierte, Güte der automatischen Klassifikation signifikant verbessert werden kann.

## Patentansprüche

1. Verfahren zur Optimierung der automatischen Fluoreszenzmustererkennung in der Immundiagnostik, **dadurch gekennzeichnet, dass**
a) vor der Bildaufnahme mit einer Kamera ein oder mehrere Indikatorfarbstoffe, die unabhängig von der Art der diagnostischen Fragestellung für die Identifikation relevanter Gewebe- oder Zellstrukturen geeignet sind zusätzlich oder gemeinsam mit einem Fluoreszenzfarbstoff inkubiert werden, der geeignet ist, ein bei Bindung spezifischer Patientenantikörper an Festphasen-gebundene Antigene entstehendes typisches Fluoreszenzmuster mit einem Mikroskop sichtbar zu machen,
b) ein Fluoreszenzbild aufgenommen wird, mit dem das Fluoreszenzmuster zum Nachweis der Bindung des spezifischen Patientenantikörpers an Festphasen-gebundene Antigene sichtbar wird,
c) ein Bild der vom Indikatorfarbstoff gefärbten Struktur aufgenommen und unabhängig vom Fluoreszenzmuster die Struktur identifiziert wird,
d) ein Kalibrationsbild von einem nur mit dem Indikatorfarbstoff ohne Fluoreszenzfarbstoff inkubierten Objektträger erzeugt und die Stärke der Färbung in Abhängigkeit von der Farbintensität des Indikatorfarbstoffes ermittelt wird,
e) im Farbkanal des Fluoreszenzfarbstoffes die mittels des aufgenommenen Kalibrationsbildes ermittelte Farbintensität des Indikatorfarbstoffes von den aufgenommenen Fluoreszenzmustern abgezogen wird,
f) die Fluoreszenzbilder in Abhängigkeit der mittels des Indikatorfarbstoffes identifizierten Strukturen in Gruppen von Einzelbilder gleichartiger Strukturen zerlegt und für diese Gruppen quantifizierbare Bildmerkmale extrahiert werden und dass
g) mittels Klassifikation gegen die Bildmerkmale von Gruppen entsprechender Strukturen aus bekannten Fluoreszenzmustern für jede der Gruppen eine Klassifikation in Form einer Fluoreszenzmusterzuordnung erfolgt, wobei das Verfahren dazu dient, Antikörper im Serum eines Patienten nachzuweisen, und wobei Propidiumiodid als ein Indikatorfarbstoff verwendet wird.

2. Verfahren nach Anspruch 1, **dadurch gekennzeichnet, dass** eine Eigenschaftsmatrix gebildet wird, die für jede Gruppe Zuordnungen ähnlicher Fluoreszenzmuster unter Berücksichtigung der Fluoreszenzhelligkeit enthält.

3. Verfahren nach Anspruch 2, **dadurch gekennzeichnet, dass** durch Bewertung der Fluoreszenzhelligkeit einer Gruppe eine Fluoreszenzhelligkeitsstufe der Gruppe bestimmt wird.

4. Verfahren nach einem der Ansprüche 1 bis 3, **dadurch gekennzeichnet, dass** zusätzlich Gewebeschnitte in eine separate Klassifikation der Fluoreszenzmuster der Einzelbilder zum Zweck der späteren Validierung gegen HEP-Zellen einbezogen werden.

5. Verfahren nach Anspruch 2 oder 3, **dadurch gekennzeichnet, dass** eine gegenseitige Validierung der Klassifikationsergebnisse der Einzelbilder mit Hilfe der Eigenschaftsmatrix vorgenommen wird, wobei aus einer Menge möglicher Fluoreszenzmuster zu jedem Klassifikationsergebnis der Einzelbilder das in der Gesamtbetrachtung eindeutige Fluoreszenzmuster ermittelt wird.

## Claims

1. Method for optimizing automated fluorescence pattern recognition in immunodiagnostics, **characterized in that**
a) prior to taking an image using a camera one or more indicator dyes suitable for identifying relevant tissue or cell structures independently of the type of diagnostic problem are additionally or jointly incubated with a fluorescent dye suitable for visualizing a typical fluorescence pattern produced upon binding of a patient's specific antibodies to solid phase-bound antigens, using a microscope,
b) a fluorescence image is taken which renders the fluorescence pattern visible for detecting binding of the patient's specific antibody to solid phase-bound antigens,
c) an image is taken of the structure stained by the indicator dye, said structure being identified independently of the fluorescence pattern,
d) a calibration image is generated of a microscope slide incubated only with the indicator dye in the absence of any fluorescent dye, with the intensity of the staining being determined as a function of the colour intensity of the indicator dye,
e) in the colour channel of the fluorescent dye, the colour intensity of the indicator dye as determined from the calibration image taken is subtracted from the recorded fluorescence patterns,
f) the fluorescence images are divided as a function of the structures identified by means of the indicator dye into groups of individual images of similar structures, with quantifiable image features being extracted for said groups, and that
g) each of the groups is classified by way of fluorescence pattern allocation by means of classification against the image features of groups of corresponding structures from known fluorescence patterns, wherein the method is used for detecting antibodies in the serum of a patient, and wherein the indicator dye used is propidium iodide.

2. Method according to claim 1, **characterized in that** a property matrix is formed which contains for each group allocations of similar fluorescence patterns, taking into account fluorescence brightness.

3. Method according to claim 2, **characterized in that** a fluorescence brightness level of a group is determined by evaluating the fluorescence brightness of said group.

4. Method according to any of claims 1 to 3, **characterized in that** additionally tissue sections are included in a separate classification of the fluorescence patterns of the individual images for the purpose of subsequent validation against HEP cells.

5. Method according to claim 2 or 3, **characterized in that** reciprocal validation of the classification results of the individual images is performed with the aid of the property matrix, with the unambiguous overall fluorescence pattern for each classification result of the individual images being determined from a set of possible fluorescence patterns.

## Revendications

1. Procédé d'optimisation de la détection automatique de motifs de fluorescence en immunodiagnostic, **caractérisé en ce que**
a) avant la prise de vue avec une caméra, un ou plusieurs colorants indicateurs, qui sont appropriés indépendamment du type de question diagnostique pour l'identification de structures tissulaires ou cellulaires pertinentes, sont incubés en plus de ou conjointement avec un colorant de fluorescence, qui est approprié pour rendre visible avec un microscope un motif de fluorescence type formé lors de la liaison d'anticorps spécifiques du patient à des antigènes reliés à des phases solides,
b) une image de fluorescence est prise, avec laquelle le motif de fluorescence est visible pour détecter la liaison de l'anticorps spécifique du patient à des antigènes reliés à des phases solides,
c) une image de la structure colorée par le colorant indicateur est prise et la structure est identifiée indépendamment du motif de fluorescence,
d) une image de calibration d'un porte-objet incubé uniquement avec le colorant indicateur sans colorant de fluorescence est générée et l'intensité de la coloration est déterminée en fonction de l'intensité de couleur du colorant indicateur,
e) dans le canal de couleur du colorant de fluorescence, l'intensité de couleur du colorant indicateur déterminée au moyen de l'image de calibration prise est extraite des motifs de fluorescence enregistrés,
f) les images de fluorescence sont décomposées en fonction des structures identifiées au moyen du colorant indicateur en groupes d'images individuelles de structures de même type et des caractéristiques d'image quantifiables pour ces groupes sont extraites, et
g) une classification sous la forme d'une attribution des motifs de fluorescence a lieu au moyen d'une classification selon les caractéristiques d'image de groupes de structures correspondantes à partir de motifs de fluorescence connus pour chacun des groupes, le procédé servant à détecter des anticorps dans le sérum d'un patient, et de l'iodure de propidium étant utilisé en tant que colorant indicateur.

2. Procédé selon la revendication 1, **caractérisé en ce qu'**une matrice de propriétés est formée, qui contient pour chaque groupe des attributions de motifs de fluorescence semblables en prenant en compte l'intensité de fluorescence.

3. Procédé selon la revendication 2, **caractérisé en ce qu'**un niveau d'intensité de fluorescence d'un groupe est déterminé par calcul de l'intensité de fluorescence du groupe.

4. Procédé selon l'une quelconque des revendications 1 à 3, **caractérisé en ce que** des coupes tissulaires sont en outre incluses dans une classification séparée des motifs de fluorescence des images individuelles pour la validation ultérieure contre des cellules HEP.

5. Procédé selon la revendication 2 ou 3, **caractérisé en ce qu'**une validation réciproque des résultats de classification des images individuelles est réalisée à l'aide de la matrice de propriétés, le motif de fluorescence manifeste dans la vue globale étant déterminé à partir d'un certain nombre de motifs de fluorescence possibles pour chaque résultat de classification des images individuelles.
